# FASCICULE DE BREVET EUROPEEN

(11) **EP 1 763 046 B1**
(45) Date de publication et mention de la délivrance du brevet: **02.07.2014**
(21) Numéro de dépôt: 06354022.3
(22) Date de dépôt: 24.07.2006
(51) Int. Cl.: H01G 9/08, H01G 2/18

(54) **Condensateur de puissance**
Leistungskondensator
Power capacitor

(30) Priorité: 08.09.2005 FR 0509161
(43) Date de publication de la demande: 14.03.2007
(73) Titulaire: Schneider Electric Industries SAS, 92500 Rueil-Malmaison (FR)
(72) Inventeur: Issiakhem, Younes c/o Schneider Electric Industries SAS, 38050 Grenoble Cedex 09 (FR); Lepage, Sébastien c/o Schneider Electric Industries SAS, 38050 Grenoble Cedex 09 (FR); Lupin, Jean-Marc c/o Schneider Electric Industries SAS, 38050 Grenoble Cedex 09 (FR)
(74) Mandataire: Tripodi, Paul

(56) Documents cités:
- EP-A- 1 352 734
- US-A- 4 837 660

## Description

La présente invention concerne un condensateur de puissance comprenant au moins un élément à enroulement bobiné, le ou chaque élément étant logé dans une enveloppe étanche, chaque élément étant associé à un dispositif de protection logé dans un boîtier fixé de manière étanche à la partie supérieure de l'enveloppe et comportant une membrane déformable fixée de manière amovible audit boîtier et susceptible de se déformer lors d'une surpression due à un défaut interne de l'enroulement de façon à actionner un moyen de déconnexion de l'élément précité.
Les condensateurs de puissance sont utilisés pour réaliser la compensation d'énergie réactive dans les réseaux électriques ou pour réaliser des systèmes de filtrage d'harmoniques.
Les condensateurs de puissance à basse tension sont réalisés par l'assemblage de plusieurs éléments unitaires selon un arrangement série parallèle.
Un élément unitaire de condensateur est réalisé par un enroulement de films plastiques métallisés et est équipé d'un système de protection.
Les enroulements sont généralement entourés d'un matériau tel que de la résine, de l'huile, du gel ou du gaz.
Un condensateur de puissance auto-cicatrisant est constitué comme indiqué précédemment par au moins un enroulement bobiné réalisé à partir de deux couches de film isolant sur lequel une couche métallique conductrice a été déposée.
Le condensateur est dit autocicatrisant car la présence de défaut dans le film diélectrique entraîne un claquage localisé qui conduit à l'évaporation des électrodes au voisinage du défaut.
Lors: de sollicitations anormales ou en fin de vie, les propriétés d'auto-cicatrisation sont détériorées. L'augmentation du courant provoque une élévation de la température au voisinage du défaut et une production de gaz de décomposition du film plastique. Sous l'effet de la pression, le boîtier peut se rompre.

Les brevets FR8606369, WO 98/14967 et FR2598024(US-A-4837660) décrivent des dispositifs de protection à surpression, lesquels après réalisation d'un court-circuit franc, entraînent la fusion d'un fusible situé en amont.

On rencontre plus fréquemment des dispositifs de protection à surpression qui appliquent un effort mécanique sur un des conducteurs d'alimentation de l'enroulement conduisant soit à la rupture mécanique du conducteur soit à la rupture d'une des soudures reliant les extrémités du conducteur à une borne de sortie. Les brevets FR 2604558, US 4748536, FR 2589618, FR 2616007 décrivent des condensateurs utilisant ce type de dispositif de protection.
L'inconvénient de ces réalisations est que le système de protection est situé à une extrémité de l'enveloppe qui contient l'enroulement du condensateur. La pression des gaz générés par la dégradation du film assure le fonctionnement du système de protection mais peut conduire à une rupture de la liaison mécanique entre l'enveloppe et le système de protection. Le renforcement de cette liaison entraîne un coût supplémentaire.

Dans le brevet FR2598024, le boîtier du condensateur est fixé autour de la partie supérieure de l'enveloppe au moyen d'un système d'encliquetage complété par de la résine. L'un des inconvénients de ce dispositif tient en ce que lorsque la pression augmente, les deux pièces ont tendance à se désolidariser. Ce dispositif présente donc une tenue mécanique faible. D'autre part, dans ce dispositif, les pièces doivent respecter des tolérances très précises, ce qui peut occasionner des risques de fuites si celles-ci ne sont pas respectées.

Le brevet WO 98/14967 décrit un condensateur avec un système de protection faisant partie d'un boîtier situé à l'intérieur de l'enveloppe dans un matériau d'enrobage.
Cette disposition permet une liaison mécanique solide entre le boîtier contenant le dispositif de protection et l'enveloppe mais elle ne permet pas de garantir que tous les gaz générés par un défaut dans l'enroulement vont atteindre la membrane déformable du système de protection. Ceci peut entraîner une rupture de l'enveloppe.
Ce type de montage présente aussi un risque de coulée du matériau d'enrobage dans le volume entre l'enroulement et la membrane.

La présente invention résout ces problèmes et propose un condensateur de puissance de conception simple présentant une tenue mécanique améliorée.

A cet effet, la présente invention a pour objet un condensateur de puissance du genre précédemment mentionné, ce condensateur étant caractérisé en ce que le ou chaque boîtier est logé à l'intérieur de la partie supérieure de l'enveloppe qui lui est associée et est fixé sur la paroi intérieure de cette partie supérieure au moyen d'un matériau polymérisable, par exemple une résine polymère, interposée entre le boîtier et l'enveloppe, ledit matériau assurant à la fois l'étanchéité et l'adhésion entre les deux pièces.

Selon une réalisation particulière, le ou chaque boîtier est fixé sur toute sa hauteur à l'intérieur de la partie supérieure de l'enveloppe qui lui est associé.

Selon une caractéristique particulière, le boîtier est en appui plan sur une partie de l'enveloppe s'étendant dans un plan sensiblement perpendiculaire à la direction longitudinale de ladite enveloppe.

Selon une autre caractéristique, le diamètre de la membrane est inférieur au diamètre extérieur du boîtier et le boîtier comporte des conduits de passage des fils situés entre la paroi extérieure du boîtier et la membrane.

Selon une autre caractéristique, les moyens pour réaliser l'étanchéité entre le volume situé au-dessous de la membrane et le volume situé au-dessus de la membrane comprennent une résine polymère coulée au-dessus du capot.

Selon une autre caractéristique, le condensateur est du type triphasé et comporte, pour chaque phase, une enveloppe, lesdites enveloppes étant solidarisées au niveau de leur partie supérieure située du côté du dispositif de protection.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective d'un condensateur de puissance triphasé complet selon l'invention,
- La figure 2 est une vue de face de la figure précédente,
- La figure 3 est une vue de côté de la figure 1,
- La figure 4 est une vue en perspective du condensateur selon la figure 1 sans le couvercle,
- La figure 5 est une vue en perspective d'un condensateur selon la figure 1 sans le plateau,
- La figure 6 est une vue en coupe suivant un plan P de la figure 1,
- La figure 7 est une vue en perspective comportant un arraché illustrant la partie intérieure d'un élément unitaire d'un condensateur triphasé selon l'invention, et
- La figure 8 est une vue en perspective du boîtier seul.

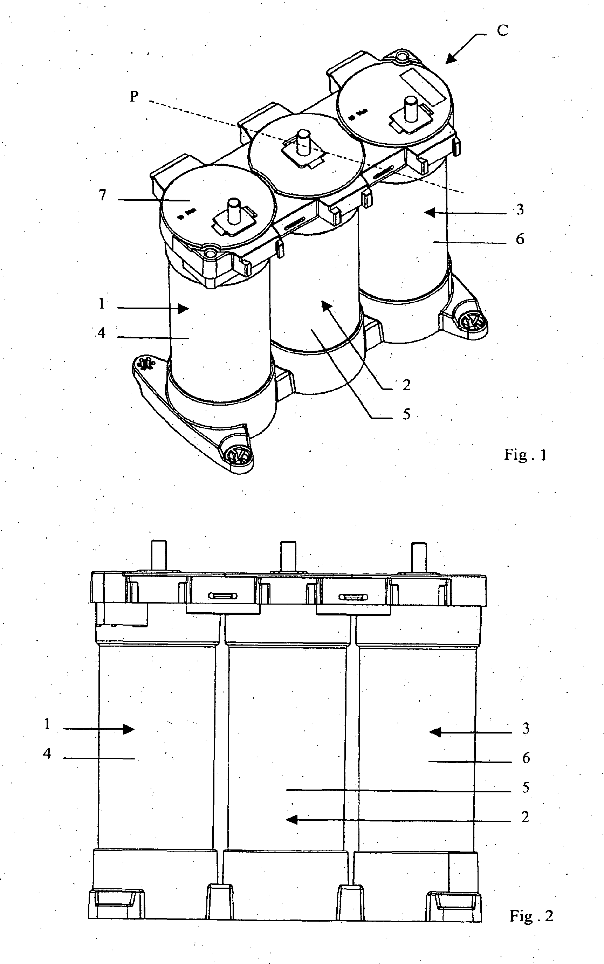

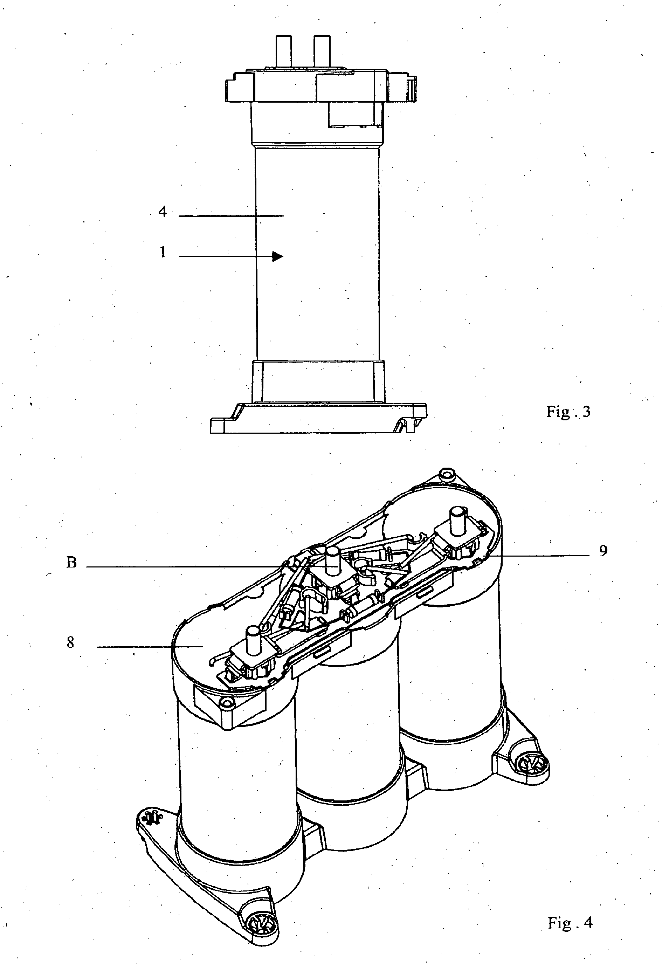

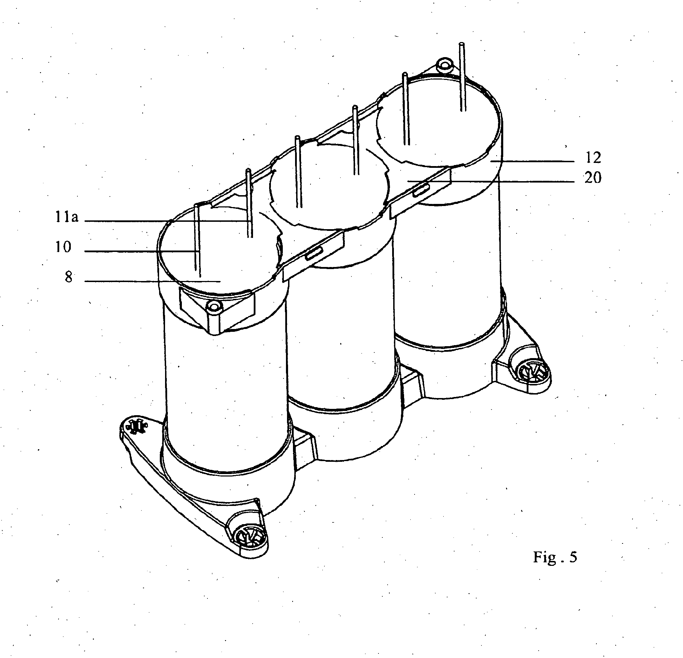

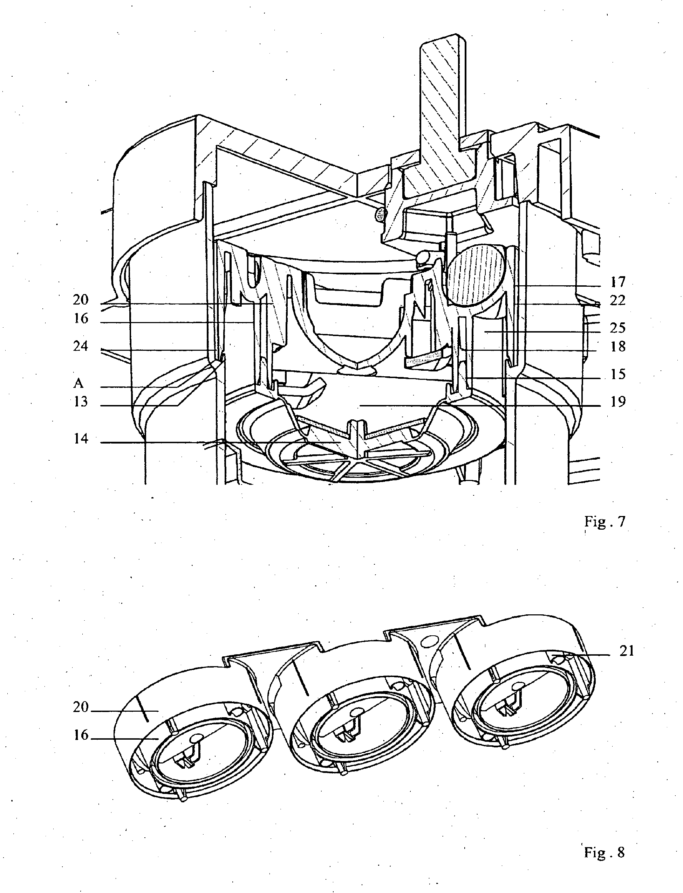

Sur les figures 1 à 6, un condensateur de puissance triphasé C comporte trois condensateurs unitaires 1,2,3 logés chacun dans une enveloppe cylindrique 4,5,6, notamment en matière plastique dont l'un des fonds est ouvert, les trois enveloppes étant réalisées d'une seule pièce. A l'intérieur de chaque enveloppe 4,5,6 est logée une bobine 23 formée par un enroulement de films plastiques métallisés. Chaque bobine 23 est enrobée dans une résine de la manière usuelle et présente deux fils de connexion 10,11 sur la face située du côté du fond ouvert de l'enveloppe 4. Chaque condensateur 1,2,3 comporte également un boîtier 20 destiné à être fixé sur ladite enveloppe 4 de manière à fermer l'ouverture précitée de l'enveloppe 4 et logeant une membrane, ladite membrane 14 étant déformable sous l'effet de la pression produite par les gaz générés par un défaut électrique, ladite membrane 14 étant mobile à l'intérieur d'un volume libre situé à l'intérieur du boîtier 20. Au-dessus de la membrane se trouve un dispositif de protection électrique comportant un fusible. Le basculement de la membrane entraîne un contact qui met en court-circuit la bobine, ce qui provoque la fusion du fusible disposé en ligne avec chaque élément monophasé, qui est ainsi isolé du réseau.
De la bobine sont issus deux fils. Le premier 10 traverse le boîtier et ressort tel qu'illustré sur la figure 5. Le second fil issu de la bobine traverse également le boîtier et est raccordé à une extrémité du fusible. Un autre fil 11a est raccordé à l'autre extrémité du fusible.
En se reportant plus particulièrement aux figures 5 à 7, on voit que conformément à l'invention, chaque boîtier 20 est logé dans la partie supérieure 12 de l'enveloppe 4 associée, et une matière polymérisable 8 est placée entre chaque boîtier 20 et cette partie supérieure 12 de l'enveloppe 4, cette matière assurant à la fois l'étanchéité et l'adhésion entre les deux pièces. Ce boîtier 20 est fixé sur toute sa hauteur à l'intérieur de la partie supérieure 12 de l'enveloppe 4. Ce boîtier 20 est positionné verticalement dans l'enveloppe et est en appui plan A sur cette enveloppe par l'intermédiaire d'une partie extérieure cylindrique 17 du boîtier 20 comportant une extrémité libre 24 destinée à être logée dans une rainure 13 formée par un dégagement de matière 22 prévu à la partie supérieure 12 de l'enveloppe 4.

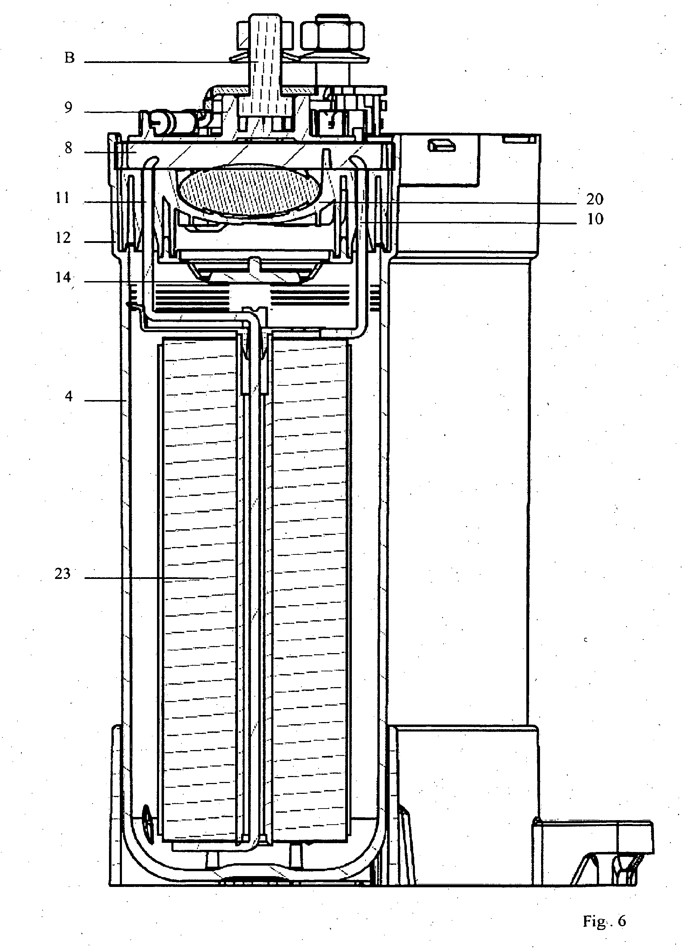

En se reportant aux figures 6 à 7, on observe que chaque boîtier 20 comporte une portion cylindrique annulaire intérieure 16 délimitant une ouverture 19, cette ouverture 19 étant fermée au moyen de la membrane précitée 14. Cette portion cylindrique intérieure 16 comporte une rainure cylindrique 18 apte à recevoir et à retenir une portion cylindrique 15 appartenant à la membrane 14 dont l'épaisseur correspond sensiblement à l'épaisseur de la rainure 18.
Le diamètre extérieur de cette portion annulaire intérieure 16 est inférieur au diamètre intérieur de la portion annulaire extérieur 17 du boîtier 20 de manière à former un espace annulaire 25 entre ces deux portions destiné au passage des fils 10,11 en provenance de la bobine 23. A cet effet, le boîtier 20 comporte des conduits 21 situés en regard de cet espace 16.

### Le montage du condensateur C selon l'invention est le suivant :

Après mise en place de la bobine 23 et de son enrobage en résine, la membrane 14 est fixée au boîtier 20 par introduction de la partie annulaire précitée 15 de la membrane 14 dans la rainure 18 précédemment mentionnée du boîtier 20. Puis, les fils 10,11 en provenance de la bobine 23 sont introduits dans les conduits 21 situés dans l'espace annulaire 25 prévu à cet effet dans le boîtier 20 de manière à traverser ledit boîtier 20 et à ressortir sur la partie supérieure 12 du boîtier 20. Puis, l'ensemble est introduit dans la partie supérieure 12 de l'enveloppe 4 jusqu'à ce que le boîtier 20 soit en appui plan sur le fond A de la rainure 13 prévue dans la partie supérieure 12 de l'enveloppe 4. Puis, les fils 10,11 sont raccordés électriquement au dispositif de coupure contenu dans la boîtier. Puis, une matière polymérisable 8 est coulée au-dessus du boîtier 20, laquelle matière s'introduit entre le boîtier 20 et la partie supérieure 12 de l'enveloppe 4 de manière à assurer l'étanchéité et l'adhésion entre les deux pièces. Puis, un plateau 9 supportant les bornes B et les éléments de connexion électriques est placé sur le boîtier 20 et les fils électriques issus des bobines 23 et des fusibles sont raccordés électriquement aux composants électriques du plateau 9. Un couvercle 7 est ensuite placé au dessus du plateau 9.

On a donc réalisé selon l'invention un condensateur de puissance présentant une tenue mécanique améliorée par le fait que le boîtier est placé à l'intérieur de l'enveloppe. Il en résulte en effet que lorsque la pression augmente, les risques de désolidarisation des deux pièces sont considérablement réduits, cette amélioration de la tenue mécanique étant également due au fait que la surface de collage est importante. Ce mode d'assemblage présente également l'avantage que les tolérances à respecter entre les deux pièces ne nécessitent pas d'être aussi contraignantes. La présence d'une grande quantité de résine permet également de diminuer les risques de dispersion entre les pièces.
Le passage des fils entre la membrane et la partie extérieure du boîtier permet un montage de l'ensemble plus aisé. En effet, selon les dispositifs de l'art antérieur, les fils nécessitaient d'être montés dans la membrane préalablement au montage du boîtier dans l'enveloppe. L'invention permet maintenant de placer la membrane sur le boîtier et de faire passer les fils à travers le boîtier ensuite.
On obtient une meilleur tenue mécanique de l'ensemble par le fait également que les trois boîtiers des trois phases sont solidarisés.
Un autre avantage qui est du au fait que le boîtier est situé dans la partie supérieure de l'enveloppe tient au fait que le plastique dont est constitué le boîtier peut être réalisé en un matériau moins résistant au feu.
En outre, ce mode d'assemblage offre plus de latitude pour modifier le système de protection qui peut être d'une autre nature par exemple un dispositif provoquant la rupture de conducteur ou l'ouverture d'un contact.

En outre, par le fait que les fils passent entre la membrane et la partie extérieure du boîtier, il n'est plus nécessaire de positionner en rotation la membrane et le boîtier l'un par rapport à l'autre. Une indexation en rotation n'est donc plus nécessaire.

Bien entendu, l'invention n'est pas limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont effectuées suivant son esprit.

## Revendications

1. Condensateur de puissance comprenant au moins un élément à enroulement bobiné (23), le ou chaque élément étant logé dans une enveloppe (4) étanche de manière à laisser un espace entre ladite enveloppe (4) et le(les) enroulement(s) permettant le passage de gaz, chaque élément (23) étant associé à un dispositif de protection logé dans un boîtier (20) fixé de manière etanche à la partie supérieure de l'enveloppe (4) et comportant une membrane déformable (14) fixée de manière amovible audit boîtier (20) et susceptible de se déformer lors d'une surpression due à un défaut interne de l'enroulement (23) de façon à actionner un moyen de déconnexion de l'élément précité,
**caractérisé en ce que** le ou chaque boîtier (20) est logé sensiblement en totalité à l'intérieur de la partie supérieure (12) de l'enveloppe (4) qui lui est associée et est fixé par sa face extérieure sur la paroi intérieure de cette partie supérieure (20) au moyen uniquement d'un matériau polymérisable (8) interposé entre la surface intérieure du boîtier (20) et la surface intérieure de l'enveloppe (4), ledit matériau (8) assurant à la fois l'étanchéité et l'adhésion entre les deux pièces, **en ce que** le diamètre extérieur de la membrane (14) est inférieur au diamètre de la partie extérieure du boîtier (20) et **en ce que** le boîtier (20) comporte des conduits (21) de passage des fils (10,11) situés entre cette paroi extérieure du boîtier (20) et la membrane (14), de manière que ces fils (10,11) traversent le boîtier sans traverser la membrane.

2. Condensateur selon la revendication 1, **caractérisé en ce que** le matériau polymérisable précité est une résine polymère.

3. Condensateur selon la revendication 1 ou 2, **caractérisé en ce que** le ou chaque boîtier (20) est fixé sur toute sa hauteur à l'intérieur de la partie supérieure (12) de l'enveloppe (4) qui lui est associé.

4. Condensateur selon l'une quelconque des revendications 1 à 3, **caractérisé en ce que** le boîtier (20) est en appui plan sur une partie (A) de l'enveloppe (4) s'étendant dans un plan sensiblement perpendiculaire à la direction longitudinale de ladite enveloppe (4).

5. Condensateur selon l'une quelconque des revendications précédentes, **caractérisé en ce que** les moyens pour réaliser l'étanchéité entre le volume situé au-dessus de la membrane (14) et le volume situé au-dessous de la membrane (14) comprennent une résine polymère (8) coulée au-dessus du capot.

6. Condensateur selon l'une quelconque des revendications précédentes, **caractérisé en ce qu'**il est du type triphasé et **en ce qu'**il comporte, pour chaque phase, une enveloppe (4), lesdites enveloppes étant solidarisées au niveau de leur partie supérieure située du côté du dispositif de protection.

## Patentansprüche

1. Leistungskondensator mit mindestens einem Wickelelement (23), welches Wickelelement/welche Wickelelemente in einem gasdichten Gefäß derart angeordnet ist/sind, dass ein Zwischenraum zwischen dem genannten Gefäß (4) und dem Wickel/den Wickeln ausgebildet ist, der eine Gasströmung erlaubt, wobei jedes Element (23) einer, in einem Gehäuse (20) angeordneten Schutzvorrichtung zugeordnet ist, welches Gehäuse gasdicht am Oberteil des Gefäßes (4) befestigt ist und eine verformbare Membran (14) umfasst, die lösbar mit dem genannten Gehäuse (20) verbunden ist und dazu dient, sich bei Auftreten eines Überdrucks infolge eines internen Fehlers der Wicklung (23) zu verformen und dadurch auf eine Abschaltvorrichtung zur Abschaltung des genannten Elements zu wirken,
**dadurch gekennzeichnet, dass** das bzw. jedes Gehäuse (20) annähernd vollständig im Inneren des Oberteils (12) des ihm zugeordneten Gefäßes (4) angeordnet und seine Außenseite ausschließlich mithilfe eines zwischen die Innenfläche des Gehäuses (20) und die Innenfläche des Gefäßes (4) eingebrachten polymerisierbaren Werkstoffs (8) mit der Innenwand dieses Oberteils (20) verbunden ist, wobei der genannte Werkstoff (8) sowohl die Gasdichtheit als auch die Haftverbindung zwischen den beiden Teilen gewährleistet, dadurch, dass der Außendurchmesser der Membran (14) kleiner ist als der Durchmesser des Außenteils des Gehäuses (20), sowie dadurch, dass das Gehäuse (20) Durchführungen (21) für die Anschlussdrähte (10, 11) umfasst, welche Durchführungen zwischen der genannten Außenwand des Gehäuses (20) und der Membran (14) angeordnet sind, derart, dass diese Anschlussdrähte (10, 11) das Gehäuse durchragen ohne die Membran zu durchragen.

2. Kondensator nach Anspruch 1, **dadurch gekennzeichnet, dass** das polymerisierbare Material ein Polymerharz ist.

3. Kondensator nach Anspruch 1 oder 2, **dadurch gekennzeichnet, dass** das bzw. jedes Gehäuse (20) über seine gesamte Höhe im Inneren des Oberteils (12) des ihm zugeordneten Gefäßes (4) befestigt ist.

4. Kondensator nach irgendeinem der Ansprüche 1 bis 3, **dadurch gekennzeichnet, dass** das Gehäuse (20) eben auf einem Teil (A) des Gefäßes (4) aufliegt und in einer annähernd senkrecht zur Längsrichtung des genannten Gefäßes (4) verlaufenden Ebene angeordnet ist.

5. Kondensator nach irgendeinem der vorhergehenden Ansprüche, **dadurch gekennzeichnet, dass** die Mittel zur Herstellung der Gasdichtheit zwischen dem Raum oberhalb der Membran (14) und dem Raum unterhalb der Membran (14) ein über der Abdeckung vergossenes Polymerharz enthalten.

6. Kondensator nach irgendeinem der vorhergehenden Ansprüche, **dadurch gekennzeichnet, dass** es sich um einen dreiphasigen Kondensator handelt, der pro Phase ein Gefäß (4) umfasst, wobei die genannten Gefäße in ihrem, auf der Einbauseite der Schutzvorrichtung angeordneten, oberen Bereich miteinander verbunden sind.

## Claims

1. A power capacitor comprising at least one coiled winding element (23), the or each element being housed in a tightly sealed enclosure (4) so as to leave a space between said enclosure (4) and the winding(s) enabling a gas flow, each element (23) being associated with a protective device housed in a case (20) fixed in tightly sealed manner to the top part of the enclosure (4) and comprising a deformable membrane (14) fixed in removable manner to said case (20) and able to deform when an overpressure occurs due to an internal fault of the winding (23) so as to actuate disconnecting means of the above-mentioned element,
**characterized in that** the or each case (20) is housed substantially totally inside the top part (12) of the enclosure (4) that is associated therewith and is fixed via its outer surface onto the inner wall of this top part (20) solely by means of a polymerisable material (8) interposed between the inner surface of the case (20) and the inner surface of the enclosure (4), said material (8) ensuring both the tightness and the adhesion between the two parts, **in that** the external diameter of the membrane (14) is smaller than the diameter of the external part of the case (20) and **in that** the case (20) comprises ducts (21) for passage of the wires (10,11) situated between this outer wall of the case (20) and the membrane (14) so that these wires (10,11) pass through the case without passing through the membrane.

2. The capacitor according to claim 1, **characterized in that** the above-mentioned polymerisable material is a polymer resin.

3. The capacitor according to claim 1 or 2, **characterized in that** the or each case (20) is fixed over the whole of its height to the inside of the top part (12) of the enclosure (4) that is associated therewith.

4. The capacitor according to any one of claims 1 to 3, **characterized in that** the case (20) is pressing flat on a part (A) of the enclosure (4) extending in a plane substantially perpendicular to the longitudinal direction of said enclosure (4).

5. The capacitor according to any one of the foregoing claims, **characterized in that** the means for achieving tightness between the volume situated above the membrane (14) and the volume situated below the membrane (14) comprise a polymer resin (8) cast over the cover.

6. The capacitor according to any one of the foregoing claims, **characterized in that** it is of the three-phase type and **in that** it comprises an enclosure (4) for each phase, said enclosures being securedly attached at the level of their top part situated on the same side as the protection device.
